# FASCICULE DE BREVET EUROPEEN

(11) **EP 1 422 799 B1**
(45) Date de publication et mention de la délivrance du brevet: **05.08.2009**
(21) Numéro de dépôt: 03292870.7
(22) Date de dépôt: 19.11.2003
(51) Int. Cl.: H02B 1/20

(54) **Dispositif de distribution d'énergie pour appareillages électriques**
Energieverteileranordnung für elektrische Geräte
Power distribution device for electrical devices

(30) Priorité: 22.11.2002 FR 0214663
(43) Date de publication de la demande: 26.05.2004
(73) Titulaire: LEGRAND FRANCE, 87000 Limoges (FR); LEGRAND SNC, 87000 Limoges (FR)
(72) Inventeur: Araujo, Fernando, 87350 Panazol (FR); Tarrade, Gérard, 87100 Limoges (FR)
(74) Mandataire: Lepelletier-Beaufond, François

(56) Documents cités:
- EP-A- 0 651 481
- DE-A- 3 813 099

## Description

La présente invention concerne, de manière générale, l'alimentation électrique d'appareillages disposés sur des rangées parallèles situées à différents niveaux d'un tableau ou d'une armoire de distribution électrique.

Les appareillages concernés sont notamment des dispositifs de protection électrique, tels que des disjoncteurs et des parafoudres, qui sont placés en tête des rangées, et qui constituent des points de départ de l'alimentation en énergie électrique des autres appareillages électriques situés sur lesdites rangées, tels que des interrupteurs, des coupe-circuits, des sectionneurs, des voyants, des variateurs etc.

De manière classique, l'alimentation électrique de ces dispositifs de protection se fait par l'intermédiaire de câbles à forte section à partir notamment de borniers de répartition de différents pôles.

L'installateur doit, dans ce cas, connecter autant de câbles d'alimentation à forte section qu'il y a de rangées de dispositifs de protection à desservir à partir des borniers, le nombre de câbles d'alimentation étant d'autant plus grand lorsqu'il s'agit, à partir de ces borniers, d'alimenter sur une même rangée plusieurs dispositifs de protection électrique tels que, par exemple, un disjoncteur, un parafoudre ainsi qu'un interrupteur sectionneur.

Un tel câblage, fastidieux et important, n'est pas toujours facile à réaliser par l'installateur, compte tenu de l'encombrement et de la rigidité de ces câbles à forte section.

Afin de faciliter la tâche de câblage à l'installateur, il a été proposé différents dispositifs de distribution d'énergie à des appareillages électriques d'un tableau ou d'une armoire de distribution électrique.

L'invention concerne plus particulièrement un de ces dispositifs de distribution d'énergie électrique qui comprend une barre longitudinale pourvue de connecteurs électriques répartis sur sa longueur, cette barre longitudinale étant destinée à s'étendre selon une direction transversale à celle desdites rangées de manière à les croiser.

On connaît déjà du document FR 2 807 578 un dispositif de ce type dans lequel la barre longitudinale est un montant de châssis qui comprend, du côté de sa face de montage sur une paroi, des canaux logeant des câbles ou conducteurs électriques et débouchant dans des logements ouverts répartis régulièrement le long dudit montant de châssis, les câbles ou conducteurs électriques étant pourvus de moyens de connexion logés dans lesdits logements ouverts.

Un tel dispositif de distribution présente plusieurs inconvénients.

Tout d'abord, il nécessite, préalablement à sa fixation sur la paroi considérée, une opération de câblage avec des câbles électriques à forte sections.

Cette opération de câblage longue et fastidieuse n'est pas toujours aisée à réaliser par l'installateur, compte tenu de la rigidité des câbles à manipuler.

En outre, lorsque le dispositif est fixé à son support et que les appareillages électriques sont desservis par les câbles circulant dans le montant de châssis et desservent les appareillages à commander, l'installateur peut très difficilement intervenir sur les connexions internes dudit montant de châssis.

Au surplus, en cas d'échauffement des câbles ou conducteurs électriques, la chaleur reste confinée dans les canaux du montant de châssis, ce qui peut amener une dégradation de la matière isolante environnante.

On connaît déjà du document DE 38 13 099 un dispositif de distribution d'énergie électrique dans lequel ladite barre longitudinale comporte une enveloppe isolante dans laquelle s'étendent en parallèle deux barrettes rigides en matière conductrice de courant portant des connecteurs électriques qui comprennent chacun une broche de connexion à enficher dans une borne de connexion d'un appareillage électrique situé sur une desdites rangées, chaque connecteur électrique d'une barrette étant juxtaposé à un connecteur électrique de l'autre barrette pour former par paire un connecteur électrique de ladite barre longitudinale. L'enveloppe isolante présente un profil en U avec entre ses parois latérales deux parois intermédiaires isolantes de façon à définir trois logements pour les barrettes.

L'invention vise à permettre la mise en oeuvre d'un tel dispositif de distribution d'énergie de façon particulièrement aisée, en vue de réduire considérablement le coût d'intervention d'un installateur pour mettre en service le tableau ou l'armoire de distribution électrique concerné.

L'invention propose à cet effet un dispositif tel que défini en introduction, **caractérisé en ce que** ladite enveloppe isolante est obtenue par surmoulage d'une matière isolante desdites barrettes, le surmoulage recouvrant également l'ensemble desdits connecteurs électriques portés par lesdites barrettes, lesdites broches de connexion desdits connecteurs électriques émergeant de ladite enveloppe isolante selon des trajets parallèles.

Ainsi, avantageusement, le dispositif de distribution d'énergie électrique selon l'invention permet d'éliminer l'opération de câblage avec des câbles électriques à forte section des appareillages électriques disposés en tête des rangées du tableau ou de l'armoire de distribution électrique considéré.

Un tel dispositif de distribution d'énergie est simplement fixé au châssis du tableau ou de l'armoire de distribution électrique et enfiché dans les appareillages électriques concernés. Il est par ailleurs raccordé par une extrémité au réseau d'alimentation électrique pour faire passer le courant électrique dans lesdites barrettes jusqu'aux connecteurs électriques.

D'autres caractéristiques non limitatives et avantageuses du dispositif de distribution d'énergie selon l'invention sont les suivantes :
- les connecteurs électriques sont régulièrement répartis le long de la barre longitudinale ;
- la barre longitudinale est constituée de plusieurs modules assemblés entre eux ;
- la barre longitudinale comprend, d'une part, un module de base, comportant, à chaque extrémité, un connecteur électrique, et, d'autre part, au moins un module supplémentaire comprenant, à une extrémité, un connecteur électrique et, à l'autre extrémité, des moyens d'assemblage aptes à coopérer avec des moyens d'assemblage complémentaires prévus à une extrémité du module de base ;
- chaque module supplémentaire comporte des moyens d'assemblage mâles respectivement femelles à ses deux extrémités ;
- chaque connecteur électrique de chaque barrette comporte une alvéole débouchant sur une face latérale du connecteur électrique et pourvue intérieurement d'un moyen de serrage d'une âme métallique d'un conducteur électrique pour former une borne de connexion électrique pour un conducteur électrique de repiquage ;
- ledit moyen de serrage est une vis dont la tête, pour être accessible à l'usager, émerge d'une face d'extrémité dudit connecteur électrique perpendiculaire à ladite face latérale ;
- les connecteurs électriques dont est pourvue la barre longitudinale sont disposés de sorte que la face latérale de chaque connecteur électrique sur laquelle débouchent lesdites alvéoles s'étend perpendiculairement aux faces avant et arrière de ladite barre longitudinale ;
- les connecteurs électriques dont est pourvue la barre longitudinale sont disposée de sorte que la face latérale de chaque connecteur électrique sur laquelle débouchent lesdites alvéoles s'étend parallèlement aux faces avant et arrière de ladite barre longitudinale ; et
- les connecteurs électriques des barrettes sont des plots parallélépipédiques en matière métallique, soudés ou sertis sur lesdites barrettes et auxquels sont soudées ou serties les broches de connexion.

L'invention concerne également un tableau ou une armoire de distribution électrique comprenant une pluralité d'appareillages électriques disposés sur des rangées parallèles situées à différents niveaux et un dispositif de distribution d'énergie électrique selon l'invention enfiché dans les bornes de connexion des appareillages électriques concernés.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective de trois quarts d'un tableau de distribution électrique selon l'invention ;
- la figure 2 est une vue d'un côté du tableau de la figure 1 ;
- les figures 3A à 3C représentent différentes vues schématiques en perspective d'un premier mode de réalisation du dispositif de distribution d'énergie selon l'invention ;
- les figures 4A à 4C représentent différentes vues schématiques en perspective d'un deuxième mode de réalisation du dispositif de distribution d'énergie selon l'invention ;
- la figure 5 représente une vue schématique en perspective de derrière d'un troisième mode de réalisation du dispositif de distribution d'énergie selon l'invention ; et
- les figures 6A et 6B représentent des vues schématiques en perspective d'un quatrième mode de réalisation du dispositif de distribution d'énergie selon l'invention.

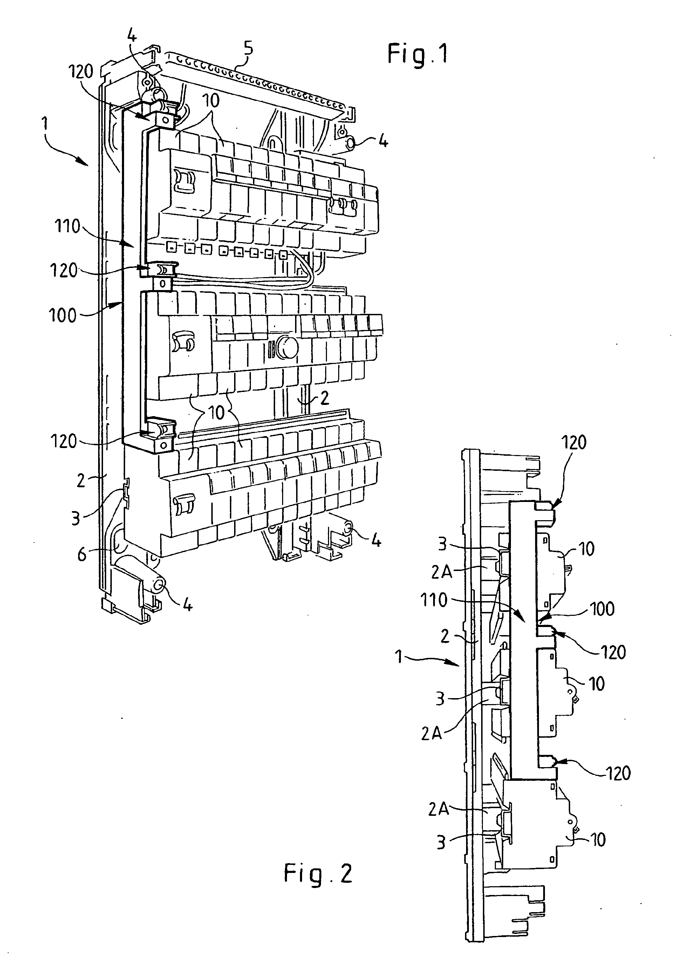

Sur les figures 1 et 2, on a représenté un tableau 1 électrique qui comporte deux montants 2 parallèles formant un châssis support de rails 3 de montage d'appareillages électriques 10.

Les deux montants 2 comportent des ouvertures 6 de forme oblongue destinées à accueillir des organes de fixation (non représentés) pour la fixation du tableau 1 à une paroi quelconque.

En outre, à chacune de leurs extrémités, les montants 2 comportent des cheminées 4 destinées à accueillir des moyens de fixation d'un couvercle ou d'un plastron non représenté.

En tête, les deux montants 2 comportent des moyens de réception d'une barrette 5 formant bornier pour le raccordement à la terre des divers appareillages électriques 10 montés sur le tableau 1.

Les appareillages électriques 10 sont disposés sur des rangées formées par les rails 3 disposés en parallèle à différents niveaux du tableau 1.

Ici, le tableau 1 comporte trois rangées d'appareillages électriques 10 parmi lesquels on retrouve en tête des disjoncteurs constituant des points de départ de l'alimentation en énergie électrique des autres appareillages électriques situés sur lesdites rangées tels que des interrupteurs, des coupe-circuits, des sectionneurs, des voyants ou encore des variateurs.

Les rails 3 sur lesquels sont montés les appareillages électriques 10 sont fixés au moyen d'organes de fixation quelconques, tels que des vis, sur des supports 2A faisant partie des montants 2 du tableau 1.

Ces rails 3 sont, de manière classique, des profilés à section globalement en U avec des ailes latérales dont les retours sont dirigés l'un à l'opposé de l'autre.

Ces profilés sont par exemple réalisés en matière métallique. Ils comprennent dans leur fond des ouvertures permettant leur fixation aux supports 2A par l'intermédiaire d'organes de fixation non représentés.

En outre, avantageusement, le tableau 1 comporte un dispositif 100 de distribution d'énergie électrique aux appareillages électriques 10 disposés ici en tête des trois rangées parallèles.

Ce dispositif 100 de distribution d'énergie est alimenté à une extrémité par des câbles électriques non représentés provenant du réseau d'alimentation électrique.

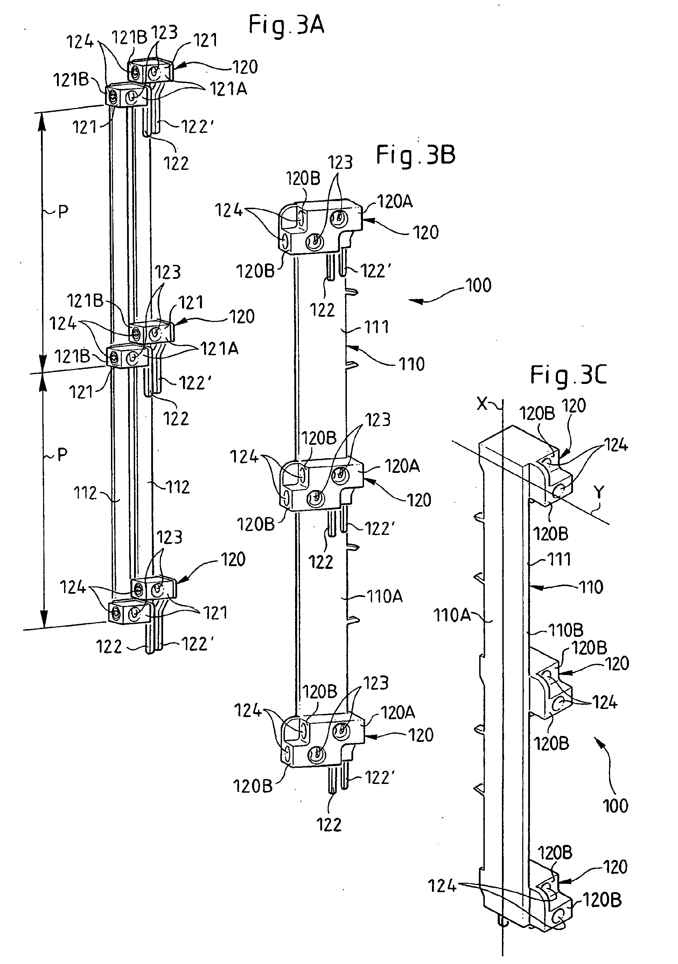

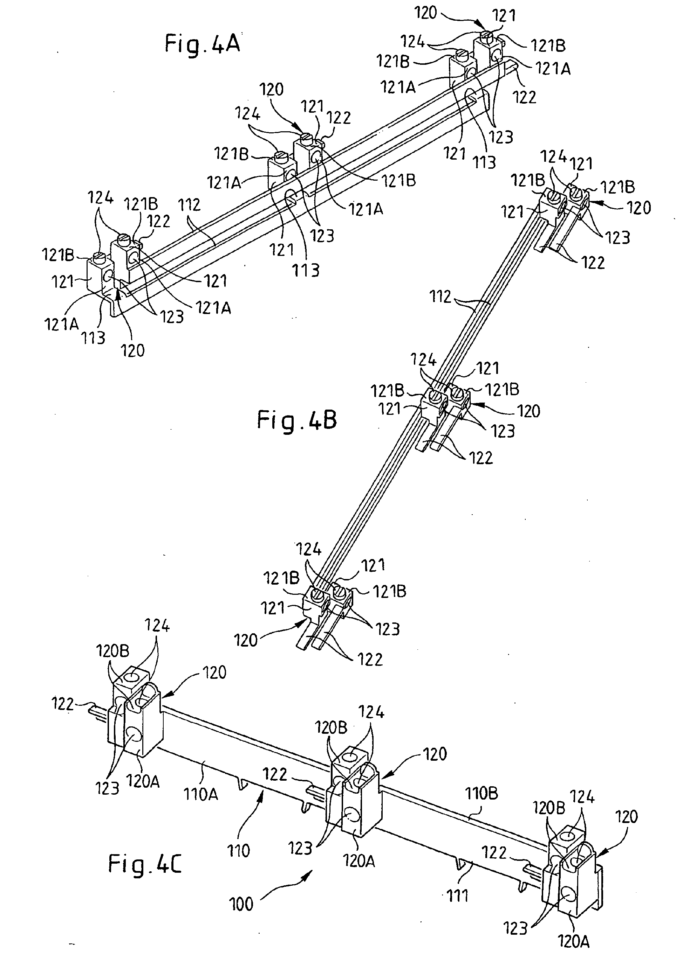

Comme le montrent plus particulièrement les figures 3B, 3C et 4C, ce dispositif 100 comprend une barre longitudinale 110 pourvue de connecteurs électriques 120 répartis sur sa longueur. Cette barre longitudinale 110 est destinée à s'étendre selon une direction X transversale aux rails 3 formant lesdites rangées de manière à les croiser.

Comme le montre plus particulièrement la figure 1, la barre longitudinale 110 pourvue de ses connecteurs électriques 120 est disposée ici sur un côté du tableau 1, le long d'un montant 2, de sorte que chaque connecteur électrique 120 qu'elle porte se positionne au-dessus du premier appareillage électrique 10 de chaque rangée dudit tableau 1.

La barre longitudinale 110 du dispositif 100 est plate et comporte des faces avant et arrière 110A ainsi que deux tranches 110B.

Avantageusement, elle comporte une enveloppe isolante 111 dans laquelle s'étendent en parallèle, selon la direction longitudinale X de la barre longitudinale 110, deux barrettes 112, essentiellement plates, rigides en matière conductrice de courant (matière métallique) portant des connecteurs électriques 121 qui comprennent chacun une broche de connexion 122 ; 122' à enficher dans une borne de connexion (non représentée) d'un appareillage électrique 10 concerné situé sur une desdites rangées (voir figures 3A, 4A et 4B).

Les barrettes 112 sont connectées à une de leurs extrémités à des câbles d'alimentation électrique (non représentés) provenant du réseau d'alimentation électrique. L'une des barrettes 112 de la barre longitudinale 110 permet un raccordement des appareillages électriques 10 à la phase alors que l'autre barrette 112 permet le raccordement des appareillages électriques 10 au neutre.

Avantageusement, chaque connecteur électrique 121 d'une barrette 112 est juxtaposé à un connecteur électrique 121 de l'autre barrette 112 pour former par paire un connecteur électrique 120 de ladite barre longitudinale 110, avec une broche de phase et une broche de neutre 122 ; 122' à enficher dans les bornes de connexion correspondantes de l'appareillage électrique 10 concerné.

Les connecteurs électriques 120 sont distants les uns des autres d'un pas régulier P correspondant sensiblement à l'écartement des rangées sur le tableau 1.

Comme le montrent plus particulièrement les figures 3A, 4A et 4B, chaque connecteur électrique 121 de chaque barrette 112 est ici réalisé sous la forme d'un plot parallélépipédique en matière métallique avec des faces latérales 121A et des faces d'extrémité 121B.

Chaque connecteur électrique 121 est solidarisé à une barrette 112 par l'intermédiaire d'une opération de soudage par exemple et les broches de connexion 122 ; 122' sont fixées par soudage ou par sertissage aux connecteurs électriques 121 des barrettes 112.

Selon le mode de réalisation représenté sur la figure 3A, chaque connecteur électrique 121 est fixé par une face latérale 121A sur la face avant de chaque barrette 112.

Dans ce cas, les connecteurs électriques 121 d'une des barrettes 112 portent des broches de connexion 122 courtes qui s'étendent selon une seule direction alors que les connecteurs électriques 121 de l'autre barrette 112 portent des broches de connexion 122' longues qui s'étendent selon deux directions formant un angle entre elles de sorte que, lorsque les connecteurs électriques 121 desdites barrettes 112 sont juxtaposés par paire, les broches de connexion 122 ; 122' de chaque paire de connecteurs électriques 121 se positionnent sur tout ou partie de leur longueur parallèlement l'une à l'autre et parallèlement auxdites barrettes 112 pour être enfichées dans l'appareillage électrique concerné.

Selon le mode de réalisation représenté sur les figures 4A et 4B, les connecteurs électriques 121 d'une barrette 112 sont fixés par une face latérale 121A à la face avant de ladite barrette 112 tandis que les connecteurs électriques 121 de l'autre barrette 112 sont fixés aux extrémités de pattes 113, s'étendant transversalement à ladite barrette 112, de façon à être décalés latéralement par rapport à ladite barrette 112.

Dans ce cas, les broches de connexion 122 des connecteurs électriques 121 des deux barrettes 112 sont identiques, elles sont courtes et s'étendent selon une seule direction. Lorsque les connecteurs électriques 121 desdites barrettes 112 sont juxtaposés par paire, les broches de connexion 122 desdits connecteurs électriques 121 de chaque paire se positionnent sur toute leur longueur parallèlement l'une à l'autre et parallèlement auxdites barrettes 112 pour être enfichées dans l'appareillage électrique concerné.

L'enveloppe isolante 111 de la barre longitudinale 110 est obtenue par surmoulage d'une matière isolante des deux barrettes 112 rigides portant leurs connecteurs électriques 121 pourvus de leurs broches de connexion 122 ; 122'.

Ainsi, comme le montrent les figures 3B, 3C et 4C, le surmoulage recouvre également l'ensemble des connecteurs électriques 121 portés par les barrettes 112 de sorte que chaque connecteur électrique 120 de la barre longitudinale 110 présente globalement la forme d'un plot parallélépipédique avec des faces d'extrémité 120B et des faces longitudinales 120A.

Bien entendu, les broches de connexion 122 ; 122' des connecteurs électriques 120 émergent de l'enveloppe isolante 111 selon des trajets parallèles.

Comme le montrent les figures 3A à 3C et 4A à 4C, chaque connecteur électrique 121 de chaque barrette 112 comporte ici une alvéole 123 débouchant sur une face latérale 121A du connecteur électrique 121 et pourvue intérieurement d'un moyen de serrage d'une âme métallique d'un conducteur électrique pour former une borne de connexion électrique d'un conducteur électrique de repiquage permettant, à partir du connecteur électrique 120 considéré de la barre longitudinale 110, l'alimentation électrique d'un autre appareillage électrique 10 en plus de celui situé en tête de la rangée considérée du tableau 1 (voir figure 1).

Ici, le moyen de serrage prévu à l'intérieur de chaque alvéole 123 de chaque connecteur électrique 121 porté par chaque barrette 112 est une vis 124 dont la tête, pour être accessible à l'usager, émerge d'une face d'extrémité 121B du connecteur électrique 121 perpendiculaire à ladite face latérale 121A.

En particulier, la tête de chaque vis 124 de serrage émerge de la face d'extrémité 120B de chaque connecteur électrique 120 de la barre longitudinale 110, sachant que chaque connecteur électrique 120 comporte deux vis 124 de serrage correspondant à deux alvéoles 123 des connecteurs électriques 121 juxtaposés d'une paire.

Ainsi, chaque connecteur électrique 120 de la barre longitudinale 110 comporte deux bornes de connexion pour le repiquage sur ledit connecteur électrique 120 de conducteurs électriques de phase et de neutre, dont les entrées sont prévues sur une face latérale 120A de celui-ci.

Selon les deux modes de réalisation représentés sur les figures 3A à 3C d'une part, et 4A à 4C d'autre part, les connecteurs électriques 120 dont est pourvue la barre longitudinale 110 du dispositif 100 sont disposés selon une première orientation de sorte que la face latérale 120A de chaque connecteur électrique 120 sur laquelle débouchent lesdites alvéoles 123 de repiquage électrique s'étend parallèlement aux faces avant et arrière 110A de ladite barre longitudinale 110.

Une telle barre longitudinale 110 est destinée à être positionnée sur un côté du tableau 1, comme représenté sur la figure 1, en avant d'un montant 2, à l'extrémité de chaque rangée d'appareillages électriques 10, de sorte que chaque connecteur électrique 120 de la barre longitudinale 110 se positionne au-dessus de chaque appareillage électrique 10 situé en tête de chaque rangée du tableau 1.

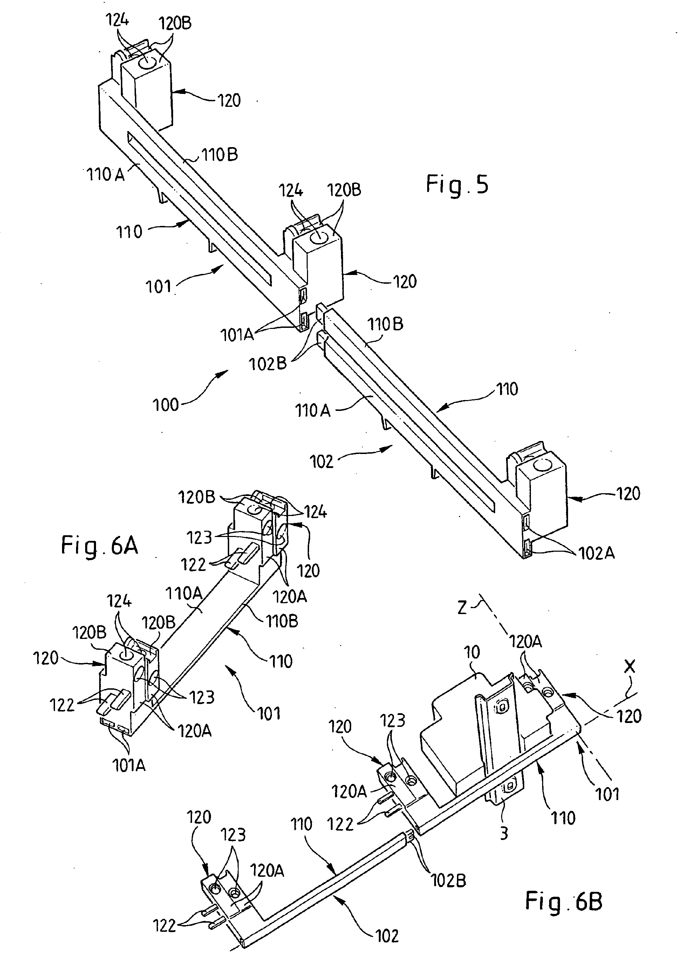

Selon une variante de réalisation représentée en particulier sur la figure 6B, les connecteurs électriques 120 de la barre longitudinale 110 du dispositif 100 sont orientés selon une deuxième orientation de sorte que la face latérale 120A de chaque connecteur électrique 120 sur laquelle débouchent lesdites alvéoles 123 de repiquage s'étend perpendiculairement aux faces avant et arrière 110A de ladite barre longitudinale 110, c'est-à-dire dans le plan de la tranche 110B de la barre longitudinale 110.

Une telle barre longitudinale 110 du dispositif 100 est destinée à être positionnée derrière les rangées d'appareillages électriques 10 entre la paroi à laquelle est fixé le tableau 1 et les rails 3 supports d'appareillages électriques 10, les connecteurs électriques 120 de la barre longitudinale 110 se positionnant, comme pour l'autre mode de réalisation du dispositif 100, au-dessus de chaque appareillage électrique 10 situé en tête de chaque rangée de sorte que leurs broches de connexion 122 s'enfichent dans les bornes de connexion desdits appareillages électriques 10.

Un tel arrangement relatif peut être avantageux pour réduire la largeur du tableau 1.

Selon les modes de réalisation représentés sur les figures 3A à 3C et 4A à 4C, la barre longitudinale 110 est réalisée de manière à former une pièce monobloc.

Selon une variante de réalisation représentée sur les figures 5, 6A et 6B, avantageusement, la barre longitudinale 110 est constituée de plusieurs modules 101, 102 assemblés entre eux.

Plus particulièrement, cette barre longitudinale 110 comprend, d'une part, un module de base 101 comportant, à chaque extrémité, un connecteur électrique 120, et, d'autre part, au moins un module supplémentaire 102 comprenant, à une extrémité, un connecteur électrique 120 et, à l'autre extrémité, des moyens d'assemblage 102B aptes à coopérer avec des moyens d'assemblage 101A complémentaires prévus à une extrémité du module de base 101.

Bien entendu, le module de base 101 et le module supplémentaire 102 comprennent chacun une enveloppe isolante 111 dans laquelle courent en parallèle des barrettes 112 rigides en matière conductrice de courant identiques à celles décrites précédemment portant les connecteurs électriques 121 nécessaires à la réalisation des connecteurs électriques 120.

Avantageusement, par l'assemblage du module de base 101 et d'un ou plusieurs modules supplémentaires 102, on peut réaliser des barres longitudinales 110 de longueurs différentes adaptées à la hauteur du tableau ou de l'armoire de distribution électrique voulue.

Ici, pour réaliser une barre longitudinale 110 identique à celle représentée sur les figures 3C et 4C, il suffit d'assembler le module de base 101 et un module supplémentaire 102.

Le module supplémentaire 102 comporte ici des moyens d'assemblage mâles 102B respectivement femelles 102A à ses deux extrémités.

Les moyens d'assemblage mâles 102B sont des broches prolongeant des extrémités des barrettes 112 et les moyens d'assemblage femelles 102A sont des logements ouverts prévus aux extrémités opposées desdites barrettes 112 dans lesquels peuvent s'enficher des broches prévues à l'extrémité d'un autre module supplémentaire (non représenté).

Les moyens d'assemblage 101A complémentaires prévus à une extrémité du module de base 101 sont identiques aux moyens d'assemblage femelle 102A prévus à l'extrémité d'un module supplémentaire 102.

Bien entendu, les moyens d'assemblage 101A, 102A, 102B des modules de base et supplémentaire permettent de connecter électriquement les barrettes 112 desdits modules assemblés.

Quelle que soit l'orientation des connecteurs électriques 120 par rapport aux faces avant et arrière de la barre longitudinale 110, l'agencement en modules de la barre longitudinale est possible (voir figure 5 et 6A, 6B).

Un tel dispositif 100 de distribution d'énergie électrique est simple à mettre en oeuvre et à fixer au tableau 1 considéré par l'installateur ainsi qu'à enficher dans les bornes de connexion des appareillages électriques 10 concernés.

Cette facilité de mise en place est un gain considérable de temps d'intervention de l'installateur dans la mise en place du tableau électrique.

## Revendications

1. Dispositif (100) de distribution d'énergie électrique à des appareillages électriques (10) disposés sur des rangées (3) parallèles situées à différents niveaux d'un tableau (1) ou d'une armoire de distribution électrique, ce dispositif (100) comprenant une barre longitudinale (110) pourvue de connecteurs électriques (120) répartis sur sa longueur, cette barre longitudinale (110) étant destinée à s'étendre selon une direction (X) transversale à celle desdites rangées (3) de manière à les croiser, ladite barre longitudinale (110) comportant une enveloppe isolante (111) dans laquelle s'étendent en parallèle deux barrettes (112) rigides en matière conductrice de courant portant des connecteurs électriques (121) qui comprennent chacun une broche de connexion (122 ; 122') à enficher dans une borne de connexion d'un appareillage électrique (10) situé sur une desdites rangées (3), chaque connecteur électrique (121) d'une barrette (112) étant juxtaposé à un connecteur électrique (121) de l'autre barrette (112) pour former par paire un connecteur électrique (120) de ladite barre longitudinale (110), **caractérisé en ce que** ladite enveloppe isolante (111) est obtenue par surmoulage d'une matière isolante desdites barrettes (112), le surmoulage recouvrant également l'ensemble desdits connecteurs électriques (121) portés par lesdites barrettes (112), lesdites broches de connexion (122 ; 122') desdits connecteurs électriques (120) émergeant de ladite enveloppe isolante (111) selon des trajets parallèles.

2. Dispositif (100) selon la revendication 1, **caractérisé en ce que** les connecteurs électriques (120) sont régulièrement répartis le long de la barre longitudinale (110).

3. Dispositif (100) selon l'une des revendications 1 ou 2, **caractérisé en ce que** la barre longitudinale (110) est constituée de plusieurs modules (101,102) assemblés entre eux.

4. Dispositif (100) selon la revendication 3, **caractérisé en ce que** la barre longitudinale (110) comprend, d'une part, un module de base (101) comportant, à chaque extrémité, un connecteur électrique (120), et, d'autre part, au moins un module supplémentaire (102) comprenant, à une extrémité, un connecteur électrique (120) et, à l'autre extrémité, des moyens d'assemblage (102B) aptes à coopérer avec des moyens d'assemblage (101A) complémentaires prévus à une extrémité du module de base (101).

5. Dispositif (100) selon la revendication 4, **caractérisé en ce que** chaque module supplémentaire (102) comporte des moyens d'assemblage mâles (102B) respectivement femelles (102A) à ses deux extrémités.

6. Dispositif (100) selon l'une des revendications 1 à 5, **caractérisé en ce que** chaque connecteur électrique (121) de chaque barrette (112) comporte une alvéole (123) débouchant sur une face latérale (121A) du connecteur électrique (121) et pourvue intérieurement d'un moyen de serrage d'une âme métallique d'un conducteur électrique pour former une borne de connexion électrique pour un conducteur électrique de repiquage.

7. Dispositif (100) selon la revendication 6, **caractérisé en ce que** ledit moyen de serrage est une vis (124) dont la tête, pour être accessible à l'usager, émerge d'une face d'extrémité (121B) dudit connecteur électrique (121) perpendiculaire à ladite face latérale (121A).

8. Dispositif (100) selon l'une des revendications 6 ou 8, **caractérisé en ce que** les connecteurs électriques (120) dont est pourvue la barre longitudinale (110) sont disposés de sorte que la face latérale (120A) de chaque connecteur électrique (120) sur laquelle débouchent lesdites alvéoles (123) s'étend perpendiculairement aux faces avant et arrière (110A) de ladite barre longitudinale (110).

9. Dispositif (100) selon l'une des revendications 6 ou 8, **caractérisé en ce que** les connecteurs électriques (120) dont est pourvue la barre longitudinale (110) sont disposés de sorte que la face latérale (120A) de chaque connecteur électrique (120) sur laquelle débouchent lesdites alvéoles (123) s'étend parallèlement aux faces avant et arrière (110A) de ladite barre longitudinale (110).

10. Dispositif (100) selon l'une des revendications précédentes, **caractérisé en ce que** les connecteurs électriques (121) des barrettes (112) sont des plots parallélépipédiques en matière métallique, soudés ou sertis sur lesdites barrettes (112) et auxquels sont soudées ou serties les broches de connexion (122 ; 122').

11. Tableau (1) ou armoire de distribution électrique comprenant une pluralité d'appareillages électriques (10) disposés sur des rangées (3) parallèles situées à différents niveaux et un dispositif (100) de distribution d'énergie électrique selon l'une des revendications 1 à 10, enfiché dans les bornes de connexion des appareillages électriques (10) concernés.

## Claims

1. A device (100) for distribution of electrical energy to electrical apparatuses (10) disposed on parallel rows (3) at different levels of an electrical distribution cabinet or board (1), said device (100) comprising a longitudinal bar (110) provided with electrical connectors (120) distributed over its length, said longitudinal bar (110) being intended to extend in a transverse direction (X) relative to that of said rows (3) so as to cross them, said longitudinal bar (110) comprising an insulating casing (111) in which there extend in parallel relationship two rigid bar members (112) of current-conducting material and carrying electrical connectors (121) which each comprise a connecting pin (122; 122') to be engaged into a connecting terminal of an electrical apparatus (10) disposed on one of said rows (3), each electrical connector (121) of a bar member (112) being juxtaposed with an electrical connector (121) of the other bar member (112) to form in pairs an electrical connector (120) of said longitudinal bar (110), **characterised in that** said insulating casing (111) is obtained by moulding an insulating material over said bar members (112), the moulding also covering the array of said electrical connectors (121) carried by said bar members (112), said connecting pins (122; 122') of said electrical connectors (120) emerging from said insulating casing (111) along parallel paths.

2. A device (100) according to claim 1 **characterised in that** the electrical connectors (120) are regularly distributed along the longitudinal bar (110).

3. A device (100) according to one of claims 1 and 2 **characterised in that** the longitudinal bar (110) is formed by a plurality of modules (101, 102) which are assembled together.

4. A device (100) according to claim 3 **characterised in that** the longitudinal bar (110) comprises on the one hand a base module (101) comprising an electrical connector (120) at each end and on the other hand at least one supplementary module (102) which at one end comprises an electrical connector (120) and at the other end assembly means (102B) for co-operating with complementary assembly means (101A) provided at an end of the base module (101).

5. A device (100) according to claim 4 **characterised in that** each supplementary module (102) comprises male (102B) and female (102A) assembly means respectively at its two ends.

6. A device (100) according to one of claims 1 to 5 **characterised in that** each electrical connector (121) of each bar member (112) comprises a cavity (123) opening on to a side face (121A) of the electrical connector (121) and internally provided with a means for gripping a metal core of an electrical conductor to form an electrical connecting terminal for an electrical patch conductor.

7. A device (100) according to claim 6 **characterised in that** said gripping means is a screw (124) whose head, to be accessible for the user, emerges from an end face (121B) of said electrical connector (121) which is perpendicular to said side face (121A).

8. A device (100) according to one of claims 6 and 8 **characterised in that** the electrical connectors (120) with which the longitudinal bar (110) is provided are so disposed that the side face (120A) of each electrical connector (120), at which said cavities (123) open, extends perpendicularly to the front and rear faces (110A) of said longitudinal bar (110).

9. A device (100) according to one of claims 6 and 8 **characterised in that** the electrical connectors (120) with which the longitudinal bar (110) is provided are so disposed that the side face (120A) of each electrical connector (120), at which said cavities (123) open, extends parallel to the front and rear faces (110A) of said longitudinal bar (110).

10. A device (100) according to one of the preceding claims **characterised in that** the electrical connectors (121) of the bar members (112) are parallelipedic studs of metal material welded or crimped to said bar members (112) and to which the connecting pins (122; 122') are welded or crimped.

11. An electrical distribution cabinet or board (1) comprising a plurality of electrical apparatuses (10) disposed on parallel rows (3) at different levels and an electrical energy distribution device (100) according to one of claims 1 to 10 engaged in the connecting terminals of the electrical apparatuses (10) in question.

## Patentansprüche

1. Vorrichtung (100) zur Verteilung elektrischer Energie an Schaltgeräte (10), die auf parallelen Reihen (3) in unterschiedlichen Höhen in einer Verteilertafel (1) oder einem Verteilerschrank angeordnet sind, wobei die Vorrichtung (100) eine Längsleiste (110) umfasst, die verteilt über ihre Länge mit Steckverbindern (120) versehen ist, wobei die Längsleiste (110) dazu bestimmt ist, sich in einer Richtung (X) quer zur Richtung der Reihen (3) so zu erstrecken, dass sie diese quert, wobei die Längsleiste (110) eine Isolierstoffummantelung (111) aufweist, in der zwei starre Schienen (112) aus stromleitendem Material verlaufen, die Steckverbinder (121) tragen, die jeweils einen Kontaktstift (122; 122') zum Einstecken in eine Anschlussklemme eines auf einer der Reihen (3) angeordneten Schaltgerätes (10) umfassen, wobei jeder Steckverbinder (121) einer Schiene (112) neben einem Steckverbinder (121) der anderen Schiene (112) angeordnet ist, um paarweise einen Steckverbinder (120) der Längsleiste (110) zu bilden,
**dadurch gekennzeichnet, dass** die Isolierstoffummantelung (111) durch Umspritzen der Schienen (112) mit einem Isolierstoff erzielt wird, wobei auch alle von den Schienen (112) getragenen Steckverbinder (121) durch das Umspritzen bedeckt werden, wobei die Kontaktstifte (122; 122') der Steckverbinder (120) aus der Isolierstoffummantelung (111) in zueinander parallelen Bahnen vorstehen.

2. Vorrichtung (100) nach Anspruch 1,
**dadurch gekennzeichnet, dass** die Steckverbinder (120) entlang der Längsleiste (110) gleichmäßig verteilt sind.

3. Vorrichtung (100) nach einem der Ansprüche 1 oder 2,
**dadurch gekennzeichnet, dass** die Längsleiste (110) von mehreren miteinander verbundenen Modulen (101, 102) gebildet ist.

4. Vorrichtung (100) nach Anspruch 3,
**dadurch gekennzeichnet, dass** die Längsleiste (110) einerseits ein Basismodul (101) mit einem Steckverbinder (120) an jedem Ende und andererseits wenigstens ein Zusatzmodul (102) mit einem Steckverbinder (120) an einem Ende und mit Verbindungsmitteln (102B) am anderen Ende umfasst, die mit komplementären Verbindungsmitteln (101A) zusammenzuwirken vermögen, welche an einem Ende des Basismoduls (101) vorgesehen sind.

5. Vorrichtung (100) nach Anspruch 4,
**dadurch gekennzeichnet, dass** jedes Zusatzmodul (102) an seinen beiden Enden Stecker- (102B) bzw. Steckbuchsen-Verbindungsmittel (102A) aufweist.

6. Vorrichtung (100) nach einem der Ansprüche 1 bis 5,
**dadurch gekennzeichnet, dass** jeder Steckverbinder (121) jeder Schiene (112) eine Steckbuchse (123) aufweist, die in eine Seitenfläche (121A) des Steckverbinders (121) mündet und innen mit einem Mittel zum Festklemmen einer Drahtader eines elektrischen Leiters versehen ist, um eine Anschlussklemme für einen Abzweigleiter zu bilden.

7. Vorrichtung (100) nach Anspruch 6,
**dadurch gekennzeichnet, dass** das Klemmmittel eine Schraube (124) ist, deren Kopf aus einer senkrecht zur Seitenfläche (121A) verlaufenden Stirnfläche (121B) des elektrischen Leiters (121) vorsteht, um für den Benutzer zugänglich zu sein.

8. Vorrichtung (100) nach einem der Ansprüche 6 oder 8,
**dadurch gekennzeichnet, dass** die Steckverbinder (120), mit denen die Längsleiste (110) versehen ist, so angeordnet sind, dass die Seitenfläche (120A) eines jeden Steckverbinders (120), in die die Steckbuchsen (123) münden, senkrecht zur Vorder-und Rückseite (110A) der Längsleiste (110) verläuft.

9. Vorrichtung (100) nach einem der Ansprüche 6 oder 8,
**dadurch gekennzeichnet, dass** die Steckverbinder (120), mit denen die Längsleiste (110) versehen ist, so angeordnet sind, dass die Seitenfläche (120A) eines jeden Steckverbinders (120), in die die Steckbuchsen (123) münden, parallel zur Vorder-und Rückseite (110A) der Längsleiste (110) verläuft.

10. Vorrichtung (100) nach einem der vorhergehenden Ansprüche,
**dadurch gekennzeichnet, dass** die Steckverbinder (121) der Schienen (112) parallelepipedische Stifte aus Metall sind, die an die Schienen (112) gelötet oder gecrimpt sind und an die die Kontaktstifte (122; 122') gelötet oder gecrimpt sind.

11. Verteilertafel (1) oder -schrank mit einer Vielzahl von Schaltgeräten (10), die auf parallelen, in unterschiedlichen Höhen befindlichen Reihen (3) angeordnet sind, und einer Vorrichtung (100) zur Verteilung elektrischer Energie nach einem der Ansprüche 1 bis 10, die in die Kontaktstifte der betreffenden Schaltgeräte eingesteckt ist.
